# EUROPÄISCHE PATENTSCHRIFT

(11) **EP 2 457 804 B1**
(45) Veröffentlichungstag und Bekanntmachung des Hinweises auf die Patenterteilung: **23.08.2017**
(21) Anmeldenummer: 11189369.9
(22) Anmeldetag: 16.11.2011
(51) Int. Cl.: B62B 7/10

(54) **Zusammenklappbares Schiebewagengestell**
Collapsible push cart frame
Châssis de chariot roulant repliable

(30) Priorität: 24.11.2010 DE 202010012978 U
(43) Veröffentlichungstag der Anmeldung: 30.05.2012
(73) Patentinhaber: Beger, Oliver, 84030 Ergolding (DE)
(72) Erfinder: Beger, Oliver, 84030 Ergolding (DE)
(74) Vertreter: Pröll, Jürgen

(56) Entgegenhaltungen:
- EP-A1- 1 700 769
- EP-A2- 1 894 810
- DE-U1-202004 020 186
- DE-U1-202009 001 203
- US-A1- 2012 319 382

## Beschreibung

Die Erfindung betrifft ein zusammenklappbares Schiebewagengestell mit den im Oberbegriff des Anspruchs 1 angegebenen Merkmalen.

Ein zusammenklappbares Schiebewagengestell in Form eines Fahrgestells für einen Kinder- oder Puppenwagen ist aus der DE 20 2010 008 030 U1 bekannt.

Aus der EP 1 894 810 A2 ist ein Fahrgestell eines Kinderwagens bekannt, das untere, von vorn nach hinten sich erstreckende, ovalförmig ausgebildete Holme aufweist, an denen vorderseitig eine Gelenkeinheit als Brückenteil, an dem oval ausgeführte Schrägholme befestigt sind, die am oberen Abschnitt Gelenke aufweisen, an denen Schiebestangen befestigt sind. In der Aufstellposition sichert ein aus zwei Stangen und einem Schlosssystem gebildetes Spreizgestänge zwischen den Schiebestangen den Verbund im aufgestellten Zustand. Die Schiebestangen überragen mit einem Endabschnitt das jeweilige Gelenk nach unten und verlaufen parallel zum Schrägholm und sind jeweils mit einer Stange eines Kreuzgestänges gekoppelt, die mit ihren unteren Enden an Schwenklagern an den unteren Holmen befestigt sind, so dass beim Überschwenken der Schiebestangen über die Schrägholme das Kreuzgestänge ein Zusammenlegen des Gestells in vertikaler und in horizontaler Richtung bewirkt. Bei dem Kreuzgestänge handelt es sich um ein X-förmig ausgebildetes Gestänge aus zwei Stangen, die miteinander schwenkbeweglich mittig verbunden sind, so dass eine Kraftübertragung in horizontaler Richtung bei gleichzeitigem Strecken und damit ein Zusammenführen der beiden Stangen beim Vorschwenken der Schiebstangen gegeben ist. Die unteren Gelenke für das Kreuzgestänge sind als Drehschwenkgelenke ausgeführt, um ein Verschwenken in zwei Richtungen zu ermöglichen.

Aus der EP 1 849 680 A2 ist ein Kinderwagengestell bekannt, bei dem zwei sich nach hinten erstreckende untere Holme vorgesehen sind, die an einem die Schrägholme verbindenden Brückenteil befestigt sind. Auf den unteren Holmen sind verschiebbar Schwenkgelenke angebracht, an denen die unteren Schenkel der Stangen eines Kreuzgestänges schwenkbar befestigt sind, an deren unteren Enden die Hinterräder gelagert sind. Die oberen Schenkelenden der Stangen des Kreuzgestänges sind an Schwenkgelenken an den Schrägholmen befestigt. Durch Vorschieben der verschiebbaren Schwenkgelenke auf den Holmen bewirkt das Scherengestänge ein Zusammenfahren der Schrägholme bei gleichzeitigem Verschwenken in Richtung der unteren Holme, wobei die Hinterräder die Vorderräderanordnungen seitlich überstehen. Ferner ist vorgesehen, dass die Schiebestangen vorklappbar an den Schrägholmen vorgesehen sind.

Aus der DE 693 02 959 T2 ist ein klappbarer Kinderwagenrahmen bekannt, der auch als Standfuß benutzt werden kann und aus zwei parallel angeordneten Seitenteilen besteht. Die Seitenteile bestehen aus hinteren Stützstreben und vorderseitigen Schrägholmen. An den Schrägholmen befinden sich Gelenke für die Stützstreben und für nach hinten abklappbare Schiebestangen, die das Gelenk um einen definierten Endabschnitt überstehen. Mit den Enden dieser Endabschnitte sind Stangen eines Kreuzgestänges verbunden, deren andere Enden an den Stützstreben angelenkt sind, so dass ein zwangsweises Zusammenfahren der Seitenteile gegeben ist, wenn die Schiebestangen nach hinten abgeklappt werden. Zwangsweise erfolgt dabei eine Bewegungstransformation, die die beiden Seitenteile nach vorheriger Entriegelung der Querverbindung aufeinanderzu bewegt.

Aus der DE 80 02 653 U1 ist ein klappbares Fahrgestell eines Kinderwagens mit zwei einander gegenüberstehenden seitlichen Tragegestängen bekannt, welche jeweils in ihrem mittleren Bereich gelenkig miteinander verbundene vordere und hintere Stützen aufweisen. An den oberen Enden der vorderen Stützen sind Griffstreben bzw. Schiebestangen angelenkt. Ferner ist eine Bodenkreuzverstrebung aus zwei in ihrem mittleren Bereich gelenkig miteinander verbundenen Streben vorgesehen, welche mit ihren freien Enden an den unteren Endstücken der einander diagonal gegenüberliegenden vorderen und hinteren Stützen angelenkt sind. Die freien Enden der Bodenkreuzverstrebung (Kreuzgestänge) sind zur Versteifung des Fahrgestells über seitliche Längsstreben miteinander verbunden. Die Längsstreben bestehen aus teleskopartig ineinander verschiebbaren Elementen, so dass beim Zusammenfahren des Gestells eine dem Spreizweg entsprechende Verlängerung erfolgt. Eine weitere hintere Kreuzverstrebung, die an L-förmigen Beschlägen an dem Kreuzungspunkt der seitlichen Tragegestänge angelenkt ist, ist zusätzlich vorgesehen, wobei die Schwenklager auf den Holmen verschiebbar angeordnet sind. Durch diese Anordnung lässt sich das Gestell schnell und mühelos auf eine äußerst kleine Abmessung zusammenklappen. Die Schiebestangen können dabei nach vorne geklappt werden. Der Abstand der Räder vergrößert sich allerdings beim Zusammenlegen, so dass ein solcher Kinderwagen oftmals nicht in den Kofferraum eines Fahrzeuges hineingestellt werden kann.

Aus der EP 1 671 869 B1 ist ferner ein Kinderwagengestell bekannt, bei dem untere Holme an einem Brückenteil angelenkt sind, an dem Schrägholme schwenkbeweglich angeordnet sind. An dem Brückenteil befindet sich eine Vorderradanordnung. Ferner sind die Enden der V-förmig auseinander gehenden unteren Holme angebracht, an denen hinten Räder vorgesehen sind. An den Schrägholmen sind verschiebbar Schiebestangen gelagert. An den unteren Enden der Schiebestangen sind an Drehgelenken Stangen eines Kreuzgestänges befestigt, deren andere Enden an den unteren Holmen angelenkt sind. Durch Vorschieben der Schiebestangen wird - nach vorheriger Aufhebung einer Spreizsicherung - das Kreuzgestänge nach vorne geschoben und verändert seine Breite entsprechend, so dass die hinteren Räder aufeinanderzu schwenken. Gleichzeitig können auch die Schrägholme nach unten geschwenkt werden. Die Größe des Kinderwagengestells im zusammengeklappten Zustand wird insbesondere von der Länge der Schiebestangen bestimmt .

Aus der DE 20 2004 020 186 U1 ist ein zusammenklappbarer Schiebewagen gemäß dem Oberbegriff von Anspruch 1 bekannt, der ein Zweifachscherengestänge aufweist. Dieses Zweifachscherengestänge ist zwischen zwei Stützholmen angeordnet, die die oberen und unteren Holme des Schiebewagens verbinden.

Aus der EP 1 700 769 B1 ist ein zusammenklappbarer Rahmen eines Kinderwagens bekannt, der zwei hintere Streben aufweist, an deren unteren Enden jeweils ein Rad oder ein Radblock befestigt ist. Ferner weist der Rahmen einen Einsatz von Doppelscherenstreben auf, also ein Zweifachscherengestänge, wobei zwei erste Scherenstreben ein oberes, V-förmiges Gelenk bilden und die unteren Enden jeweils ebenfalls miteinander verbunden sind. Die einzelnen Scherenstangen sind geradlinig ausgeführt und an unteren Fixgelenken an den Streben schwenkbeweglich befestigt und mit den oberen Enden an verschiebbaren Lagern schwenkbeweglich befestigt. Dieses Zweifachscherengestänge ermöglicht ein paralleles Zusammenfahren der beiden Seitenteile des Rahmens. Die hinteren Streben sind an Schrägholmen angelenkt und werden dabei automatisch zu den Vorderrädern gezogen.

Ein Kinderwagengestell mit dem gleichen Grundaufbau, nämlich Schrägholmen und Stützholmen oder Stützstreben, die daran schwenkbeweglich angelenkt sind, ist ferner aus der DE 200 10 365 U1 bekannt. Dieses Gestell wird zum einen über ein Spreizgestänge im Sitzbereich und zum anderen über ein Zweifachscherengestänge an den Stützholmen in einer Aufstellposition gesichert gehalten und kann durch Betätigen beider Spreizgestänge parallel zusammengefahren werden. Das Zweifachscherengestänge ist dabei obenseitig fix an den Stützholmen angelenkt, während die unteren Gelenke an Verschiebelagern auf den Stützholmen angebracht sind. Die einzelnen Scherenstangen des Zweifachscherengestänges sind geradlinig ausgeführt.

Den bekannten Kinderwagengestellen mit einem Zweifachscherengestänge haftet der Nachteil an, dass diese Spreizgestänge nur in Verbindung mit solchen Wagengestellen einsetzbar sind, die seitlich parallel zusammengefahren werden können. Die Spreizgestänge sind auf Wagengestelle der gattungsgemäßen Art, wie sie beispielsweise aus der EP 1 366 968 B1, DE 23 48 716 A1, EP 1 466 810 A1, EP 1 671 869 A1 oder der EP 1 894 810 A2 bekannt sind nicht geeignet, da bei solchen Gestellen die oberen und unteren Holme beim Zusammenklappen des Gestells unter Berücksichtigung ihrer Schrägstellungen zueinander und den linearen oder nichtlinearen Längsausformungen zusammengeklappt werden, wobei aufgrund der Formgebung und Verläufe der einzelnen Holme unterschiedliche Wege zwischen den paarigen Anbindungspunkten der Scherenstangen bei den Bewegungsabläufen gegeben sind, so dass mit den herkömmlichen Zweifachscherengestängen ein Zusammenfahren auf ein kleines Maß praktisch nicht möglich ist.

Der Erfindung liegt die Aufgabe zugrunde, das dargestellte Problem zu lösen und ein gattungsgemäßes Schiebewagengestell mit einem solchen Mehrfachscherengestänge zu versehen, dass ein Zusammenklappen des Schiebewagengestells nach der Erfindung auf kleinstem Raum ermöglicht und dabei den unterschiedlichen Formen und den V-förmigen Verläufen der Holme und Spreizweitenbewegungen Rechnung trägt.

Die Aufgabe löst die Erfindung durch die Merkmale gemäß dem kennzeichnenden Teil von Anspruch 1. Bevorzugte Ausführungen ergeben sich aus den Unteransprüchen. Soweit zuvor mindestens ein Zweifachscherengestänge angegeben ist, so kann selbstverständlich auch ein Dreifachscherengestänge zur Anwendung kommen. Allerdings sind dann bei den Scherenstangen Vorkehrungen zu treffen, dass im gestreckten Zustand des Scherengestänges auch eine ausreichende Stabilität noch gegeben ist und der gesamte Verbund der Scherenstangen auch im ausgezogenem Zustand in sich stabil bleibt. Dies kann beispielsweise dadurch bewirkt werden, dass die Scherengelenke, mittels derer jeweils zwei Scherenstangen miteinander verbunden sind, durch Lagerungsplatten unterstützt bzw. versteift werden. Die Ausformung der seitlichen Scherenstangen, die miteinander über ein Gelenk verbunden sind, weisen abgebogene oder angewinkelte Endabschnitte auf, wobei diese bei einer Scherenstange zu einer geöffneten U-Form führt. Die damit gelenkig verbundene zweite Stange hingegen weist an der einen Seite im Uhrzeigersinn abgewinkelte oder abgebogene Enden auf, während an der anderen Seite die Abwinkelungen oder abgebogenen Enden entgegengesetzt im Uhrzeigersinn verlaufen. Durch diese erfindungsgemäße Ausprägung ist gewährleistet, dass den unterschiedlichen Wegstrecken beim Zusammenlegen Rechnung getragen und das Zusammenfalten auf engstem Raum ermöglicht wird. Lediglich die Breite der einzelnen Scherenstangen, die dann im zusammengefalteten Zustand praktisch um die Scherengelenke verschwenkt übereinander liegen, bestimmt im Wesentlichen den Abstand zwischen den Holmen an der linken und der rechten Seite des Schiebewagengestells.

Die Abwicklungen oder Abbiegungen verlaufen in der Regel in Stangenlängsrichtung, zur Lagerungsanpassung können zusätzlich auch Abkröpfungen an den Enden vorgesehen sein.

An den Kupplungselementen sind Befestigungen vorgesehen, um die Vorderradanordnungen aufzunehmen. Hier kann eine Einzelradaufhängung vorgesehen sein oder ein Brückenteil, an dem zwei seitliche Räder angeordnet sind. In bekannter Weise sollten die Gabeln oder Halter Bestandteil von Radanordnungen sein, die um eine vertikale Achse drehbar sind, so dass ein Kurvenfahren des Schiebewagengestells ermöglicht wird. An den hinteren Enden der unteren Holme sind entweder Radlager für Einzelräder oder für Mehrfachräder vorgesehen. Ebenso können dort in bekannter Weise die Bremseinrichtungen für die hinteren Räder vorgesehen sein.

Als besonders vorteilhaft hat es sich erwiesen, die Enden jeweils um 10° bis 45° gegenüber der Mittenlängsachse der jeweiligen Scherenstange abzuwinkeln bzw. abzubiegen. Dadurch und unter Berücksichtigung der Länge und gegebenenfalls einer Höhenlagenverformung gegenüber dem Mittenabschnitt der Scherenstange und auch unter Berücksichtigung der Längen der einzelnen Hebelarme gegenüber dem Drehgelenk ist jegliche Anpassung an die unterschiedlichen Holmgestaltungen und Aufstellweiten zwischen den seitlichen Holmen möglich und ein Zusammenfahren des Schiebewagengestells zum Zwecke des Verstauens auf kleinstem Raum. Bei einem Zweifachscherengestell, aber auch bei einem Dreifachscherengestell mit mittiger Schere, sind die Enden oben und unten verlaufend aufeinanderzu gebogen oder abgewinkelt ausgeführt und in bekannter Weise durch Gelenke miteinander verbunden. Das Gelenk kann beispielsweise durch einen Niet realisiert sein, der in kongruente Bohrungen in den Stangen und in den miteinander zu verbindenden Enden der Stangen eingesetzt und vernietet wird. Ebenso können aber auch Schraubverbindungen vorgesehen sein. Diese Ausführungsform ermöglicht, dass praktisch die Scherenstangen im zusammengefahrenen Zustand des Wagengestells parallel ohne Behinderung verlaufen.

Für die Funktion des Zweifachscherengestänges ist es bei einigen Ausführungen notwendig, dass ein Lagerungspaar fix an den Holmen auf gleicher Höhe vorgesehen ist. Dies kann an den unteren Holmen der Fall sein oder aber auch an den oberen Holmen oder aber auch an den hinten verbindenden Stützholmen, die schwenkbeweglich an dem jeweiligen Schrägholm und dem zugeordneten unteren Holm jeweils angelenkt sind. Die zugehörigen zweiten Paarenden der Gestellstangen sind hingegen an Verschiebelagern angelenkt, die beispielsweise verschiebbar an den korrespondierenden anderen Schrägholmen, unteren Holmen oder auch an den Stützholmen angebracht sind, so dass beim Zusammenfahren der Wegausgleich über die Verschiebung der Verschiebelager erfolgt. Der Verschiebeweg muss entsprechend vorgesehen sein. An den verschiebbaren Drehgelenken bzw. den Verschiebelagern, an den Stützholmen oder an den Schrägholmen oder auch an den unteren Holmen, je nachdem, wo sich die Fixlager befinden, können auch federbelastete Rasten vorgesehen sein, die mindestens im aufgeklappten Zustand des Schiebewagengestells in korrespondierende Löcher der jeweiligen Holme sichernd einrasten und über einen Auslösehebel deaktivierbar sind. Sind hierzu federbelastete Schwenkhebel vorgesehen, so müssen diese an beiden Seiten des Gestells praktisch gleichzeitig bedient werden, damit überhaupt ein Verschieben der Scherenstangen, und damit ein Übergang zwischen einer Gebrauchsform, bei der das Fahrgestell aufgestellt ist, in eine zusammengeklappte Form, einer zweiten Gebrauchsform, nämlich der Verstauposition, verbracht werden kann.

Wenn das untere Gelenk des Stützholmes ein Fixlager ist, so ist es zur Bewegungsführung notwendig, das obere Gelenk an einem gegenüber einem Schwenklager an dem Schrägholm untenseitig vorstehenden Überstand der Schiebestange anzulenken. Wird diese nach vorne geschwenkt, wird auf einem Kreisbogen der Stützholm mitgezogen. Die Längen sind dabei so aufeinander abgestimmt, dass das Gestell nach unten zusammenklappt. Um ein horizontales Zusammenführen gleichzeitig zu ermöglichen, ist das Scherengestänge einerseits an fixen Lagern an den unteren Holmen angelenkt und an fixen Lagern an den Stützholmen. Bei dieser Ausführung brauchen also keine Verschiebelager für das Scherengestänge vorgesehen sein. Dies setzt voraus, dass der Anlenkungspunkt der Schere beispielsweise um 60 mm gegenüber dem Lager des Stützholmes vorverlagert vorgesehen ist.

Die Erfindung ist grundsätzlich auch bei einem Schiebewagengestell anwendbar, das keine Stützstreben aufweist. In diesem Fall muss das Doppelscherengestell so ausgebildet sein, dass es gleichzeitig auch die Stabilitätsfunktion erfüllt. Wenn Stützstreben vorgesehen sind, so muss dafür Sorge getragen werden, dass diese Stützstreben beim Zusammenfalten entweder an dem Schrägholm oder an den unteren Holmen verschiebbar und verschwenkbar gelagert sind. Die Gelenke müssen also an Verschiebelagern angebracht sein, damit sie entsprechend der Bewegung beim Zusammenfalten folgen können. In einem solchen Fall kann beispielsweise an den Verschiebelagern für die Schrägholme zugleich auch das Gelenk für ein unteres Ende einer Scherenstange angebracht sein. Das obere Ende der Kreuzungsstange ist dann an einem fixen oder auch an einem verschiebbaren Gelenk an dem Stützholm anbringbar. Ebenso ist es aber auch möglich, die Verschiebelager an den Stützholmen vorzusehen und die unteren Lager, also die an den unteren Holmen vorgesehenen, feststehend anzubringen. In diesem Fall ist das Verschiebelager für die Stützholme gesondert angeordnet. Ebenso kann das Zweifachscherengestell auch alleinig an den Stützholmen befestigt sein.

Durch die Ausbildung der Enden der Scherenstangen und deren gelenkige Ankopplung oder gelenkige Verbindung ist stets gewährleistet, dass das Fahrgestell wesentlich enger zusammengefaltet werden kann, als wenn Scherenstangen bekannter Art hier zum Einsatz kommen. Das Zweifach- oder Dreifachscherengestell kann auch nur horizontal unten die beiden unteren Holme miteinander verbinden. Auch dann muss ein Lagerpunkt fix sein und der andere demgegenüber verschiebbar auf jedem der Holme angeordnet sein, wodurch die Spreizfunktion ebenfalls erfüllt ist. Da ohnehin zwischen den Schrägholmen unterschiedliche Einsätze einsetzbar sind und diese mit den Schrägholmen verbunden werden, ist eine ausreichende Stabilität auch ohne zusätzlich Querholme gegeben, um ein solches Schiebegestell schieben zu können.

Die Stützholme können darüber hinaus an den unteren Enden von verschiebbaren Schiebestangen angebracht sein, so dass sie automatisch mit dem Verschieben der Schiebestange nach vorne verschwenken. Das zwischen den Stützholmen angebrachte Zweifachscherengestänge wird dann ebenfalls zusammen geschoben bzw. bei umgekehrter Bewegung auseinandergezogen. Ein anderer mitgekoppelter Mechanismus ist dann gegeben, wenn die Schiebestangen um ein Gelenk verschwenkbar an den Schrägholmen angelenkt sind und gegenüber dem Gelenk einen unteren Überstand aufweisen, an dem das obere Drehgelenk eines Stützholmes angebracht ist. Werden die beiden seitlichen Schiebestangen nach vorne geschwenkt, werden die Stützstangen automatisch nach hinten verschwenkt und bewirken zugleich eine Kraftausübung auf das Zweifach- oder Dreifachscherengestänge. Dieses verschiebt sich über die Verschiebelager und zieht gleichzeitig alle Teile aufeinanderzu, so dass auch in diesem Fall eine sehr kompakte Verstaueinheit erreichbar ist.

Je nach Ausführungsform kann das Zweifachscherengestänge an dem unteren Holm angelenkt sein und schräg nach oben verlaufend an dem jeweiligen seitlichen Schrägholm oder an daran befestigten Schiebestangen angelenkt sein oder an dem unteren Holm schräg nach oben und hinten verlaufend und an dem seitlichen Stützholm angelenkt sein, wobei die unteren oder die oberen Anlenkungen an den Schiebelagern vorgesehen sind und die anderen Lager Fixlager sind. Es eröffnen sich für den Fachmann hier verschiedenste Kombinationsmöglichkeiten, die von der gewünschten Handhabung abhängig sind. Die Stützholme können grundsätzlich von hinten nach vorne ansteigend im aufgestellten Zustand des Schiebewagens oder von vorne nach hinten verlaufend angeordnet sein. Ebenso können die äußeren Schenkellängen der über Gelenke verkreuzten Scherenstangen unterschiedliche Längen obenseitig und untenseitig aufweisen, worüber unterschiedliche Bewegungswege während des Zusammenfahrens erzielbar sind.

Wenn darüber hinaus die Schiebestangen obenseitig über ein Bügelteil miteinander verbunden sind, so sollte das Bügelteil zum Zwecke des ungehinderten Zusammenfaltens des Gestells aus zwei Abschnitten bestehen, die gelenkig miteinander verbunden und gelenkig auch an den Schiebestangen befestigt sind.

Das erfindungsgemäße Schiebewagengestell kann ein solches für einen Kinder- oder Puppenwagen, für einen Rollator, also einer Gehhilfe, sein oder für einen Einkaufswagen verwendet werden. Im Falle der Anwendung bei einem Rollator sollten die Schiebestangen als Einzelschiebestangen ausgebildet und kurz gehalten sein, damit die Person, die den Rollator schiebt, sich mit den Händen darauf abstützen kann. Des Weiteren wäre es hier angebracht, beispielsweise die Scherengestänge zwischen den beiden Schrägholmen anzubringen. Auch dieses ist möglich, um die Spreizwirkung hierüber zu erzielen und zugleich auch ein Zusammenfalten zu ermöglichen. Diese Anordnung hätte den Vorteil, dass ein Gehraum zwischen den beiden Handgriffen an den Schiebestangen gegeben ist, damit die Person zwischen den beiden hinteren Rädern stehend den Rollator voranbewegen kann. Die Anordnung behindert auch nicht die Einbringung eines Sitzbrettes zwischen den beiden Schrägholmen und/oder an den zusätzlich vorgesehenen Stützholmen.

Die Erfindung wird nachfolgend anhand des in den Zeichnungen dargestellten Ausführungsbeispiels ergänzend erläutert.

In den Zeichnungen zeigen:
- FIG 1: eine Rückansicht eines Schiebewagengestells mit einem Zweifachscherengestänge nach der Erfindung,
- FIG 2: eine perspektivischer Darstellung des Schiebewagengestells nach Anspruch 1 mit abgeschnittenen Schiebestangen, ebenfalls im aufgestellten Zustand,
- FIG 3: in einer Draufsicht das in den Figuren 1 und 2 dargestellte Scherengestänge im zusammengeklappten Zustand des Schiebewagengestells,
- FIG 4: ein herausgelöstes Zweifachscherengestell, wie es bei dem in den Figuren 1 bis 3 dargestellten Schiebewagengestell zu Anwendung kommt und
- FIG 5: ein weiteres Beispiel eines Schiebewagengestells in perspektivischer Darstellung, bei dem sowohl die Stützholme als auch das Zweifachscherengestell an Fixlagern drehbar und verschwenkbar befestigt sind.

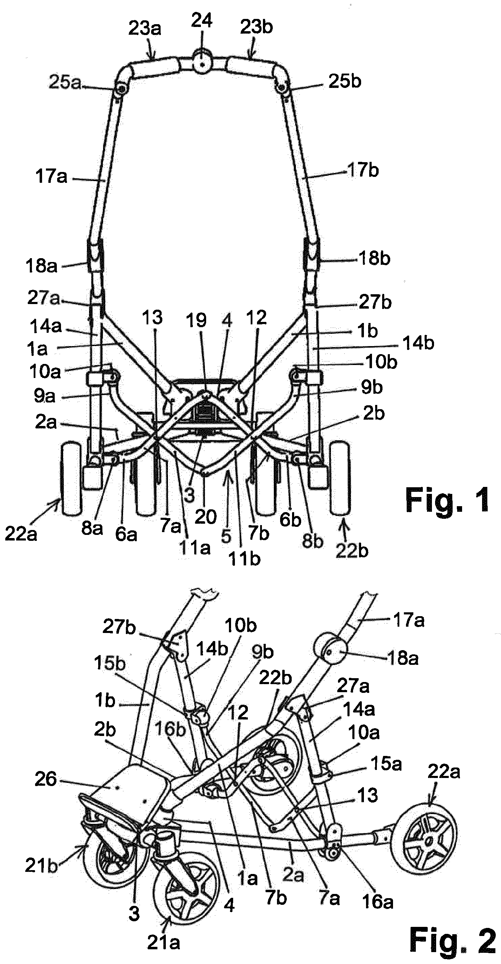

Das Schiebewagengestell nach den Figuren 1 - 3 ist ein Kinderwagengestell und besteht aus Schrägholmen 1a und 1b die oben zur Mittenlängsachse des Gestells hin abgekröpft sind und untenseitig an einem Kopplungselement 4 angelenkt sind. Dieses Kopplungselemente 4 und die Schrägholme 1a, 1b tragen eine Fußraste 26 und sind darüber hinaus mit dem Kopplungselement 3 schwenkbeweglich verbunden, sodass die Schrägholme 1a, 1b nach unten geklappt werden können. An dem Kopplungselement 3 sind über im wesentlichen vertikale Schwenkachsen Unterholme 2a, 2b angelenkt, die ebenfalls in einem Abstand abgekröpft sind und nach hinten verlaufend angeordnet sind. An ihren Enden sind Hinterradanordnungen 22a und 22b angebracht. Soweit hier von Hinterradanordnungen 22a, 22b gesprochen wird, ist dabei ein Lager zu verstehen, dass an den unteren Holmen an deren Enden befestigt ist und jeweils ein Hinterrad trägt.

An dem Kopplungselement 3 sind ferner Vorderradanordnungen 21a und 21b befestigt. Diese bestehen aus um senkrechte Schwenkachsen drehbare und dem gegenüber auch feststellbare Gabeln, die die Vorderräder tragen, sodass hierüber ein leichtes Kurvenfahren ermöglicht wird. An den Schrägholmen 1a, 1b sind Lagerplatten von Lagern 27a und 27b befestigt, an denen schwenkbeweglich Stützholme 14a und 14b angelenkt sind, die mit den anderen Enden an verschiebbaren Lagern 16a und 16b an den unteren Holmen 2a, 2b angelenkt sind, die nach vorne verschiebbar sind, wenn sie aus der hinteren Position in eine vordere Position beim Zusammenklappen des Wagengestells verbracht werden. An den verschiebbaren unteren Lagern 16a, 16b sind weiterhin Anlenkungspunkte 8a, 8b für erste äußere Abschnitte von Scherenstangen 7a, 7b vorgesehen. Weiterhin befinden sich auf den Stützholmen 14a, 14b Verschiebelager 15a, 15b an denen die zugehörigen zweiten Scherenstangen mit ihren Scherenstangen 11a, 11b mit ihren abgewinkelten nach oben stehenden Enden 9a und 9b angelenkt sind. An den unteren Anlenkungspunkten 8a und 8b sind die Enden 6a und 6b der Gelenkstangen 7a und 7b, ebenfalls abgewinkelt und zwar im nahezu gleichen Winkel wie die oberen Enden 9a und 9b ausgeführt, bezogen auf die Längsachse der jeweiligen Gelenkstangen 7a, 7b bzw. 11a, 11b, verschwenkbar befestigt.

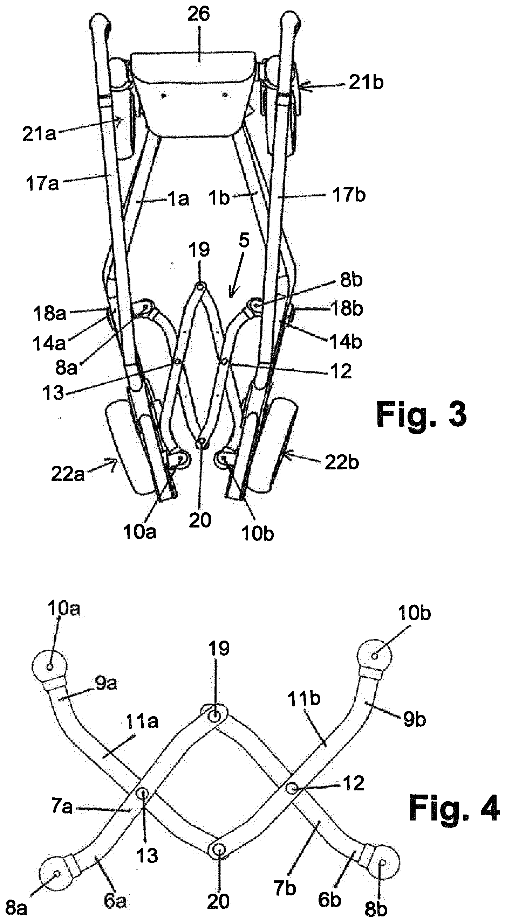

Das erfindungsgemäß ausgebildete Scherengestell ist isoliert in Figur 4 dargestellt, es weist unterschiedliche Längen der äußeren Hebelarme auf, die von den Gelenkstangen 11a und 7a bzw. 11b und 7b durch die Scherengelenke 12 und 13 gebildet werden. Die unterschiedlichen Längen sind zur Anpassung an die Bewegungswege der Schrägholme und der unteren Holme beim Zusammenklappen über die Stützholme erforderlich. Auffällig ist jedoch, dass die Schwenkstangen 7a, 7b spiegelbildlich angeordnete, abgewinkelte Endabschnitte aufweisen, die unten nach außen und oben nach innen zeigen. Die oberen Abschnitte sind durch ein Gelenk 19 miteinander verbunden. Die Abwinklungsrichtung wirkt derartig, dass die Stange ein gestrecktes S bildet, während die beiden anderen Scherenstangen 11a, 11b aufeinander zu abgewinkelte Endabschnitte 9a und 9b einen unteren Endabschnitt aufweisen. Die unteren Endabschnitte sind über ein Gelenk 20 miteinander verbunden. Durch die Art der Anordnung der abgewinkelten Enden und durch die unterschiedlichen Längen der gebildeten Hebelarme gegenüber den Scherengelenken 12 und 13, folgt das zweifache Scherengestänge den unterschiedlichen Bewegungswegen der Holme beim Zusammenklappen des Schiebewagengestells.

Aus den Figuren 1 - 3 ist ferner ersichtlich, dass die Anlenkungspunkte 10a, 10b, des zweifachen Scherengestänges 5 an Verschiebelagern 15a vorgesehen sind. Wenn die unteren Lager 8a, 8b sich nach vorne bewegen und gleichzeitig die Schrägholme 1a und 1b nach unten, verschieben sich zugleich auch die Verschiebelager 15a und 15b nach oben, sodass die in Figur 3 dargestellte zusammengefaltete Stellung durch das Schiebewagengestell eingenommen werden kann. Die unteren Lager 16a und 16b können, ebenso wie die Verschiebelager 15a und 15b, mit Rastsicherungen versehen sein, z.B. mit einer Rastwippe, die mit einem Zapfen in ein Loch der Schrägholme 1a, 1b oder der unteren Holme 2a, 2b einrastet, sodass mindestens im aufgestellten Zustand das Gestell arretiert ist. Es können aber auch andere Querverbindungssicherungsteile vorgesehen sein, die mit dem Zweifachscherengestänge 5 zusammen wirken bzw. auf das obere Gelenk 19 wirken. Solche Sicherungen sind beispielsweise aus der DE 43 10 663 A1, aus der DE 88 907 022 U1 und der DE 20 2004 020 186 U1 bekannt.

An den oberen Enden der Schrägstangen 1a, 1b sind Gelenke 18a und 18b vorgesehen, an deren zweiten Gelenkteile die Schiebestangen 17a und 17b befestigt sind, die zum Verbringen in eine Verstaustellung nach vorne über die Schrägholme 1a, 1b verschwenkbar sind. Die Schiebestangen 17a und 17b sind obenseitig über einen Schiebebügel verbunden, der aus zwei Schiebebügelteilen 23a und 23b besteht, die über einer Rastkupplung 24 mittig miteinander verbunden und schwenkgelenkig über Gelenke 25a und 25b an den Schiebestangen befestigt sind, sodass sie nach Lösen der Rastkupplung 27 ein Zusammenklappen des Schiebewagengestells nicht behindern. Es ist ersichtlich, dass dieser Schiebebügel zugleich auch eine Aufstellsicherung des Schiebewagengestells in der aufgestellten Position gemäß Figuren 1 und 2 bietet.

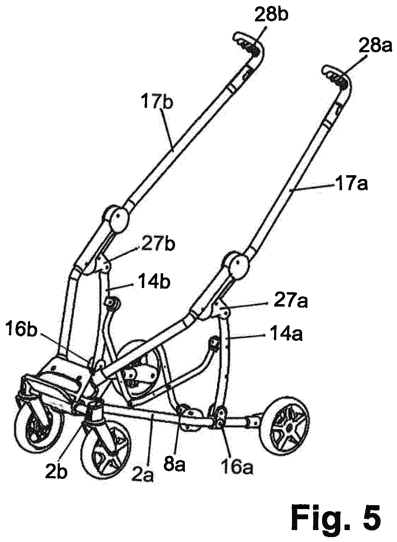

In Figur 5 ist ein weiteres Ausführungsbeispiel dargestellt, das sich von dem Ausführungsbeispiel nach den Figuren 1 bis 4 dadurch unterscheidet, dass die unteren Lager 16a, 16b der Stützholme 14a, 14b Fixlager sind und die oberen Lager 27a, 27b an den verschwenkbaren Überständen der Schiebestangen 17a, 17b ebenfalls fix angebracht sind. Ferner sind die unteren Anlenkungspunkte 8a, 8b (nicht zu sehen) ebenfalls Fixlager an den unteren Holmen 2a, 2b. Auf die Übernahme der weiteren Bezugzeichen aus den Figuren 1 und 2 ist verzichtet worden. An den Schiebestangen 17a, 17b sind einzelne Schiebegriffe 28a, 28b vorgesehen.

## Patentansprüche

1. Zusammenklappbares Schiebewagengestell, aufweisend seitliche von vorne unten nach hinten oben im Wesentlichen V-förmig zueinander vorgesehene und gegenüber unteren seitlichen, von vorne nach hinten ebenfalls im Wesentlichen V-förmig zueinander verlaufenden Holmen (2a, 2b) verschwenkbare Schrägholme (1a, 1b), die vorderseitig an Kopplungselementen (3, 4) angelenkt sind und mittels eines Scherengestänges (5) im aufgestellten, gespreizten Zustand gehalten sind und hierüber sowohl in vertikaler als auch horizontaler Richtung zusammenlegbar sind, wobei die unteren äußeren Enden (6a, 6b) der Scherenstangen (7a, 7b) an unteren Anlenkungspunkten (8a, 8b) an den unteren Holmen (2a, 2b) und die oberen äußeren Enden (9a, 9b) der Scherenstangen (11a, 11b) an Anlenkungspunkten an den Schrägholmen (1a, 1b) oder an Stützholmen (14a, 14b) angebracht sind, die zwischen den oberen Schrägholmen (1a, 1b) und den unteren Holmen (2a, 2b) zwischengefügt und hieran angelenkt sind, wobei das Scherengestänge (5) mindestens ein Zweifachscherengestänge ist, wobei die oberen äußeren Enden (9a, 9b) der nach oben verlaufenden Scherenstangen (11a, 11b) gegenüber der Mittenlängsachse des Schiebewagengestells nach oben im Wesentlichen parallel zum jeweiligen Abschnitt des Schrägholmes (1a, 1b) verlaufend oder aufeinander zu abgewinkelt oder gebogen ausgestaltet sind und die so gebildeten Hebelarme eine erste definierte Länge zwischen dem zugeordneten Scherengelenk (12,13) und dem oberen Anlenkungspunkt aufweisen und wobei die unteren äußeren Enden (6a, 6b) der nach unten verlaufenden Scherenstangen (7a, 7b) gegenüber der Mittenlängsachse des Schiebewagengestells nach unten im Wesentlichen senkrecht oder in einem spitzen Winkel zum jeweiligen Schrägholm (1a, 1b) oder voneinander weg gerichtet abgewinkelt ausgestaltet sind und die so gebildeten Hebelarme eine zweite definierte Länge zwischen dem zugeordneten Scherengelenk (12,13) und dem unteren Anlenkungspunkt aufweisen, **dadurch gekennzeichnet, dass** die freien oberen Enden der äußeren untenseitig angelenkten Scherenstangen (7a, 7b) des Scherengestänges (5) aufeinander zu abgewinkelte oder gebogene Endabschnitte aufweisen, dass die freien unteren Enden der äußeren obenseitig angelenkten Scherenstangen (11a, 11b) des Scherengestänges (5) aufeinander zu abgewinkelte oder gebogene Endabschnitte aufweisen und dass die Enden jeweils über Gelenke (19, 20) miteinander verbunden sind.

2. Schiebewagengestell nach Anspruch 1, **dadurch gekennzeichnet, dass** die äußeren Enden (9a, 9b) der nach oben verlaufenden Scherenstangen (11a, 11b) jeweils um 10° bis 45° gegenüber der Mittenlängsachse abgewinkelt oder abgebogen ausgestaltet sind.

3. Schiebewagengestell nach Anspruch 1, **dadurch gekennzeichnet, dass** das obere oder untere Anlenkungspunktepaar an Verschiebelagern (15a, 15b) auf den Schrägholmen (1a, 1b) und den unteren Holmen (2a, 2b) angeordnet ist.

4. Schiebewagengestell nach Anspruch 1, **dadurch gekennzeichnet, dass** das obere Anlenkungspaar am Verschiebelager (15a, 15b) längsbeweglich an den Schrägholmen (1a, 1b) befestigt ist und die feststehenden Lager an den unteren Holmen (2a, 2b) vorgesehen sind oder dass die Verschiebelager (15a, 15b) an den Stützholmen (14a, 14b) verschiebbar vorgesehen sind und die unteren Lager (16a, 16b) feststehend angebracht sind.

5. Schiebewagengestell nach Anspruch 1 oder 4, **dadurch gekennzeichnet, dass** die Stützholme (14a, 14b) an Lagern (16a, 16b) an den unteren Holmen (2a, 2b) schwenkbeweglich befestigt sind und die oberen Enden an parallel zu den Schrägholmen (1a, 1b) angeordneten Abschnitten von Schiebestangen (17a, 17b) schwenkbeweglich befestigt sind, welche Schiebestangen (17a, 17b) schwenkbeweglich über erste Gelenke (18a,18b) an den Schrägholmen (1a, 1b) angelenkt sind, wobei die Schiebestangen (17a, 17b) nach vorne über die Schrägholme (1a, 1b) verschwenkbar sind und zweite Gelenke (27a, 27b) im Schwenkradius des die ersten Gelenke (18a,18b) überstehenden Abschnitts nach hinten gezogen werden.

6. Schiebewagengestell nach Anspruch 1 oder 4, **dadurch gekennzeichnet, dass** die Stützholme (14a, 14b) an den unteren Endabschnitten von Schiebestangen (17a, 17b) schwenkbeweglich befestigt sind, die in Führungen an den Schrägholmen (1a, 1b) verschiebbar gelagert sind, derart, dass beim relativen Zusammenschieben das Zweifachscherengestänge zusammenzieht und das Schiebewagengestell zusammenklappt und beim Hochziehen das Zweifachscherengestänge spreizt und das Schiebewagengestell aufstellt.

7. Schiebewagengestell nach Anspruch 1, **dadurch gekennzeichnet, dass** zwischen den unteren seitlichen Holmen (2a, 2b) ein Zweifachscherengestänge zusätzlich angebracht ist.

8. Schiebewagengestell nach Anspruch 1 oder 4, **dadurch gekennzeichnet, dass** das Zweifachscherengestänge (5) an den unteren Holmen (2a, 2b) angelenkt ist und schräg nach oben verlaufend an den seitlichen Schrägholmen (1a, 1b) oder an daran befestigten Schiebestangen (17a, 17b) angelenkt ist.

9. Schiebewagengestell nach Anspruch 1, 4 oder 5, **dadurch gekennzeichnet, dass** das Zweifachscherengestänge (5) an den unteren Holmen schräg nach oben und hinten verlaufend und an den seitlichen Stützholmen (14a, 14b) angelenkt ist.

10. Schiebewagengestell nach Anspruch 8 oder 9, **dadurch gekennzeichnet, dass** die unteren oder die oberen Anlenkungen an Schiebelagern vorgesehen sind und die anderen Lager Fixlager sind.

11. Schiebewagengestell nach Anspruch 1, 4, 5 oder 9, **dadurch gekennzeichnet, dass** die Stützholme (14a, 14b) von hinten nach vorne ansteigend verlaufend im aufgestellten Zustand des Schiebewagengestells angeordnet sind.

12. Schiebewagengestell nach Anspruch 1, **dadurch gekennzeichnet, dass** die Längen der abgewinkelten oder abgebogenen Enden (6a, 6b, 9a, 9b) der Scherenstangen (7a, 7b, 11a, 11b) des Zweifachscherengestells (5) und die Breite der Scherenstangen (7a, 7b, 11a, 11b) dem gewünschten Zusammenfaltungsgrad des Schiebewagengestells angepasst sind.

13. Schiebewagengestell nach Anspruch 1, **dadurch gekennzeichnet, dass** das Schiebewagengestell ein Kinder- oder Puppenwagengestell, das Gestell eines Rollators oder das Gestell eines Einkaufswagens ist.

14. Schiebewagengestell nach Anspruch 1 oder 13, **dadurch gekennzeichnet, dass** zwischen den Schrägholmen im aufgestellten Zustand des Fahrgestells Funktionseinsätze an den Schrägholmen und/oder an den Schiebestangen befestigbar sind.

## Claims

1. Collapsible pushchair frame, comprising lateral inclined posts (1 a, 1 b) which are provided substantially in V-shape relative to one another from the front at the bottom rearwardly to the top and which are pivotable relative to lower lateral posts (2a, 2b) similarly extending substantially in V-shape relative to one another from the front rearwardly, the inclined posts being pivotably connected at the front end with coupling elements (3, 4) and being held in the erected spread state by means of a scissor linkage (5) and collapsible by that in both vertical direction and horizontal direction, wherein the lower outer ends (6a, 6b) of the scissor bars (7a, 7b) are mounted at lower pivot points (8a, 8b) on the lower posts (2a, 2b) and the upper outer ends (9a, 9b) of the scissor bars (11 a, 11 b) are mounted at pivot points on the inclined posts (1 a, 1 b) or on support posts (14, 14b) which are interposed between the upper inclined posts (1a, 1b) and the lower posts (2a, 2b) and pivotably connected therewith, wherein the scissor linkage (5) is at least a double scissor linkage, wherein the upper outer ends (9a, 9b) of the upwardly extending scissor bars (11 a, 11 b) relative to the centre longitudinal axis of the pushchair frame are formed to extend upwardly substantially parallel to the respective section of the inclined post (1a, 1b) or to be bent over or curved and the thus-formed lever arms have a first defined length between the associated scissor joint (12, 13) and the upper pivot point and wherein the lower outer ends (6a, 6b) of the downwardly extending scissor bars (7a, 7b) relative to the centre longitudinal axis of the pushchair frame are formed to be bent over downwardly substantially perpendicularly or at an acute angle with respect to the respective inclined post (1 a, 1 b) or directed away from one another and the thus-formed lever arms have a second defined length between the associated scissor joint (12, 13) and the lower pivot point, **characterised in that** the free upper ends of the outer scissor bars (7a, 7b), which are pivotably connected at the lower end, of the scissor linkage (5) have end sections bent over or curved towards one another, that the free lower ends of the outer scissor bars (11 a, 11 b), which are pivotably connected at the upper end, of the scissor linkage (5) have end sections bent over or curved towards one another and that the ends are respectively connected together by way of joints (19, 20).

2. Pushchair frame according to claim 1, **characterised in that** the outer ends (9a, 9b) of the upwardly extending scissor bars (11 a, 11 b) are each formed to be bent over or curved through 10° to 45° relative to the centre longitudinal axis.

3. Pushchair frame according to claim 1, **characterised in that** the upper or lower pivotation point pair is arranged at slide bearings (15a, 15b) on the inclined posts (1 a, 1 b) and the lower posts (2a, 2b).

4. Pushchair frame according to claim 1, **characterised in that** the upper pivotation point pair at the slide bearing (15a, 15b) is secured to the inclined posts (1a, 1b) to be longitudinally movable and the stationary bearings are provided at the lower posts (2a, 2b) or that the slide bearings (15a, 15b) are provided to be displaceable at the support posts (14a, 14b) and the lower bearings (16a, 16b) are mounted to be stationary.

5. Pushchair frame according to claim 1 or 4, **characterised in that** the support posts (14a, 14b) are secured to bearings (16a, 16b) at the lower posts (2a, 2b) to be pivotably movable and the upper ends are secured to sections, which are arranged parallel to the inclined posts (1 a, 1 b), of push rods (17a, 17b) to be pivotably movable, which push rods (17a, 17b) are pivotably connected with the inclined posts (1 a, 1 b) by way of first joints (18a, 18b) to be pivotably movable, wherein the push rods (17a, 17b) are pivotable forwardly over the inclined posts (1 a, 1 b) and second joints (27a, 27b) are drawn rearwardly in the pivot radius of the section protruding beyond the first joints (18a, 18b).

6. Pushchair frame according to claim 1 or 4, **characterised in that** the support posts (14a, 14b) are secured to the lower end sections of push rods (17a, 17b) to be pivotably movable, which are so displaceably mounted in guides at the inclined posts (1 a, 1 b) that when relative pushing together takes place the double scissor linkage draws together and the pushchair frame collapses and when drawn up the double scissor linkage spreads and the pushchair frame erects.

7. Pushchair frame according to claim 1, **characterised in that** a double scissor linkage is additionally mounted between the lower lateral posts (2a, 2b).

8. Pushchair frame according to claim 1 or 4, **characterised in that** the double scissor linkage (5) is pivotably connected with the lower posts (2a, 2b) and is pivotably connected with the lateral inclined posts (1 a, 1 b) or with push bars (17a, 17b), which are secured thereto, to extend obliquely upwardly.

9. Pushchair frame according to claim 1, 4 or 5, **characterised in that** the double scissor linkage (5) is pivotably connected with the lower posts to extend obliquely upwardly and rearwardly and with the lateral support posts (14a, 14b).

10. Pushchair frame according to claim 8 or 9, **characterised in that** the lower or the upper pivotation points are provided at slide bearings and the other bearings are fixed bearings.

11. Pushchair frame according to claim 1, 4, 5 or 9, **characterised in that** the support posts (14a, 14b) are arranged to extend so as to rise from the rear to the front in the erected state of the pushchair frame.

12. Pushchair frame according to claim 1, **characterised in that** the lengths of the bent over or curved ends (6a, 6b, 9a, 9b) of the scissor bars (7a, 7b, 11 a, 11 b) of the double scissor frame (5) and the width of the scissor bars (7a, 7b, 11 a, 11 b) are adapted to the desired degree of collapsing of the pushchair frame.

13. Pushchair frame according to claim 1, **characterised in that** the pushchair frame is a child or doll's carriage frame, the frame of a rollator or the frame of a shopping trolley.

14. Pushchair frame according to claim 1 or 13, **characterised in that** between the inclined posts functional inserts are securable to the inclined posts and/or to the push rods in the erected state of the chassis.

## Revendications

1. Châssis pliant de véhicule à pousser, comprenant des longerons obliques (1a, 1b) latéraux disposés sensiblement en forme de V l'un par rapport à l'autre de la partie inférieure avant vers la partie supérieure arrière et pouvant pivoter par rapport à des longerons (2a, 2b) inférieurs latéraux s'étendant eux aussi en forme de V l'un par rapport à l'autre de l'avant vers l'arrière, lesquels longerons obliques étant articulés côté avant sur des éléments de couplage (3, 4) et étant retenus au moyen d'une tringlerie en parallélogramme (5) dans l'état déployé et installé, et pouvant être repliés par l'intermédiaire de celle-ci dans une direction aussi bien verticale qu'horizontale, dans lequel les extrémités extérieures inférieures (6a, 6b) des tringles en parallélogramme (7a, 7b) étant montées aux points d'articulation (8a, 8b) inférieurs sur les longerons inférieurs (2a, 2b) et les extrémités extérieures supérieures (9a, 9b) des tringles en parallélogramme (11a, 11b) étant montées aux points d'articulation sur les longerons obliques (1a, 1b) ou sur les longerons d'appui (14a, 14b), qui étant intercalés entre les longerons obliques supérieurs (1a, 1b) et les longerons inférieurs (2a, 2b) et articulés sur ces derniers, dans lequel la tringlerie en parallélogramme (5) étant au moins une double tringlerie en parallélogramme, dans lequel les extrémités extérieures supérieures (9a, 9b) des tringles en parallélogramme (11a, 11b) s'étendant vers le haut étant configurées de manière à s'étendre par rapport à l'axe longitudinal médian du châssis de véhicule à pousser vers le haut sensiblement parallèlement à la partie respective du longeron oblique (1a, 1 b) ou de manière coudée ou pliée l'une vers l'autre et les bras de levier ainsi formés présentant une première longueur définie entre l'articulation en parallélogramme (12, 13) associée et le point d'articulation supérieur et dans lequel les extrémités extérieures inférieures (6a, 6b) des tringles en parallélogramme (7a, 7b) s'étendant vers le bas étant configurées de manière coudée vers le bas sensiblement perpendiculairement par rapport à l'axe longitudinal médian du châssis de véhicule à pousser ou forment un angle aigu avec le longeron oblique (1a, 1b) respectif ou étant orientées à distance l'une de l'autre, et les bras de levier ainsi formés présentant une deuxième longueur définie entre l'articulation en parallélogramme (12, 13) associée et le point d'articulation inférieur, **caractérisé en ce que** les extrémités supérieures libres des tringles en parallélogramme (7a, 7b) extérieures articulées vers le bas de la tringlerie en parallélogramme (5) présentent des parties d'extrémité coudées ou pliées les unes vers les autres, **en ce que** les extrémités inférieures libres des tringles en parallélogramme (11a, 11b) extérieures articulées vers le haut de la tringlerie en parallélogramme (5) présentent des parties d'extrémité coudées ou pliées les unes vers les autres, et **en ce que** les extrémités respectives sont reliées les unes aux autres par des articulations (19, 20).

2. Châssis de véhicule à pousser selon la revendication 1, **caractérisé en ce que** les extrémités extérieures (9a, 9b) des tringles en parallélogramme (11a, 11 b) s'étendant vers le haut sont configurées de manière coudée ou pliée chacune de 10° à 45° par rapport à l'axe longitudinal médian.

3. Châssis de véhicule à pousser selon la revendication 1, **caractérisé en ce que** la paire de points d'articulation supérieurs ou inférieurs est agencée sur des paliers coulissants (15a, 15b) sur les longerons obliques (1a, 1b) et les longerons inférieurs (2a, 2b).

4. Châssis de véhicule à pousser selon la revendication 1, **caractérisé en ce que** la paire de points d'articulation supérieurs sur le palier coulissant (15a, 15b) est fixée sur les longerons obliques (1a, 1b) de manière à pouvoir se déplacer longitudinalement et les paliers fixes sont situés sur les longerons inférieurs (2a, 2b) ou **en ce que** les paliers coulissants (15a, 15b) sont situés coulissants sur les longerons d'appui (14a, 14b) et les paliers inférieurs (16a, 16b) sont montés fixes.

5. Châssis de véhicule à pousser selon la revendication 1 ou 4, **caractérisé en ce que** les longerons d'appui (14a, 14b) sur les paliers (16a, 16b) sont fixés pivotants sur les longerons inférieurs (2a, 2b) et les extrémités supérieures sont fixées pivotantes sur des parties de tringles coulissantes (17a, 17b) agencées parallèlement aux longerons obliques (1a, 1b), lesquelles tringles coulissantes (17a, 17b) sont articulées de manière pivotante sur les longerons obliques (1 a, 1 b) par l'intermédiaire de premières articulations (18a, 18b), dans lequel les tringles coulissantes (17a, 17b) peuvent pivoter vers l'avant par l'intermédiaire des longerons obliques (1a, 1b) et des deuxièmes articulations (27a, 27b) sont tirées vers l'arrière dans le rayon de pivotement de la partie faisant saillie des premières articulations (18a, 18b).

6. Châssis de véhicule à pousser selon la revendication 1 ou 4, **caractérisé en ce que** les longerons d'appui (14a, 14b) sont montés pivotants sur les parties d'extrémité inférieures de tringles coulissantes (17a, 17b), qui sont montées mobiles dans des guidages sur les longerons obliques (1a, 1 b), de telle manière que lors d'un pliage relatif, la double tringlerie en parallélogramme se regroupe et le châssis de véhicule à pousser se replie et lors d'un dépliage, la tringlerie en parallélogramme double se déploie et met en place le châssis de véhicule à pousser.

7. Châssis de véhicule à pousser selon la revendication 1, **caractérisé en ce qu'**une double tringlerie en parallélogramme est montée en plus entre les longerons (2a, 2b) latéraux inférieurs.

8. Châssis de véhicule à pousser selon la revendication 1 ou 4, **caractérisé en ce que** la double tringlerie en parallélogramme (5) est articulée sur les longerons inférieurs (2a, 2b) et est articulée en s'étendant à l'oblique vers le haut sur les longerons obliques latéraux (1a, 1b) ou sur les tringles coulissantes (17a, 17b) fixées dessus.

9. Châssis de véhicule à pousser selon la revendication 1, 4 ou 5, **caractérisé en ce que** la double tringlerie en parallélogramme (5) est articulée sur les longerons inférieurs, de manière à s'étendre de manière oblique vers le haut et vers l'arrière, et sur les longerons d'appui latéraux (14a, 14b).

10. Châssis de véhicule à pousser selon la revendication 8 ou 9, **caractérisé en ce que** les articulations inférieures ou les articulations supérieures sont situées sur des paliers coulissants et les autres paliers sont des paliers fixes.

11. Châssis de véhicule à pousser selon la revendication 1, 4, 5 ou 9, **caractérisé en ce que** les longerons d'appui (14a, 14b), une fois le châssis de véhicule à pousser installé, sont agencés de manière à s'étendre en montant de l'arrière vers l'avant.

12. Châssis de véhicule à pousser selon la revendication 1, **caractérisé en ce que** les longueurs des extrémités (6a, 6b, 9a, 9b) coudées ou pliées des tringles en parallélogramme (7a, 7b, 11 a, 11b) du double châssis en parallélogramme (5) et la largeur des tringles en parallélogramme (7a, 7b, 11a, 11b) sont adaptées au degré souhaité de pliage du châssis de véhicule à pousser.

13. Châssis de véhicule à pousser selon la revendication 1, **caractérisé en ce que** le châssis de véhicule à pousser est un châssis de poussette pour enfant ou pour poupée, le châssis d'un déambulateur, ou le châssis d'un chariot à provisions.

14. Châssis de véhicule à pousser selon la revendication 1 ou 13, **caractérisé en ce que**, entre les longerons obliques, une fois le châssis installé, des éléments d'insertion fonctionnels peuvent être fixés sur les longerons obliques et/ou sur les tringles coulissantes.
